(19) Europäisches Patentamt
European Patent Office
Office européen des brevets

(11) **EP 0 637 118 B1**

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int Cl.$^6$: **H02H 9/00**

(21) Anmeldenummer: **93111953.1**

(22) Anmeldetag: **27.07.1993**

(54) **Schaltungsanordnung zur Begrenzung des Einschaltstromes und der Ueberspannung eines elektronischen Vorschaltgerätes**

Circuit for limiting inrush current and overvoltage of an electronic ballast

Circuit pour limiter le courant de démarrage et surtension d'un ballast électronique

(84) Benannte Vertragsstaaten:
**AT CH DE ES FR GB IT LI NL SE**

(43) Veröffentlichungstag der Anmeldung:
**01.02.1995 Patentblatt 1995/05**

(73) Patentinhaber: **KNOBEL AG LICHTTECHNISCHE KOMPONENTEN**
**CH-8755 Ennenda (CH)**

(72) Erfinder: **Ribarich, Thomas**
**CH-8750 Glarus (CH)**

(74) Vertreter: **Blum, Rudolf Emil Ernst et al**
**c/o E. Blum & Co**
**Patentanwälte**
**Vorderberg 11**
**8044 Zürich (CH)**

(56) Entgegenhaltungen:
**EP-A- 0 272 514          EP-A- 0 339 598**
**US-A- 5 032 968**

**Beschreibung**

Die Erfindung betrifft eine Schaltungsanordnung zur Begrenzung des Einschaltstroms und der Ueberspannung einer Gleichspannungsversorgung eines Vorschaltgerätes gemäss dem Oberbegriff des ersten Patentanspruchs.

Bei elektronischen Vorschaltgeräten mit einem sinusförmigen Eingangsstrom werden sogenannte Hochsetzsteller (boost converter) eingesetzt, bei welchen als Speicherelement ein Kondensator verwendet wird. Beim Einschalten der Netzspannung werden zur Begrenzung des Einschaltstroms Anlaufwiderstände verwendet, welche im Betrieb des Hochsetzstellers nach Aufladen des Kondensators mit Hilfe eines Relais, eines Triacs oder eines Thyristors kurzgeschlossen werden. Solche Einschaltstrombegrenzungen wurden in den Anwendungsberichten PD22 8905 und PD22 9002 der Firma Siemens und in der US Patentschrift 5,032,968 beschrieben. Einer der Nachteile dieser Einschaltstrombegrenzung ist die im Betrieb verbleibende Verlustleistung. Bei einem eingeschalteten Thyristor beträgt die über den Thyristor liegende Spannung etwa ein Volt. Die Verlustleistung ergibt sich damit aus dem Produkt dieser Spannung mit dem Eingangs strom. Ein weiterer Nachteil der Verwendung eines Triacs oder Thyristors ist, dass diese Schalter bei einer am Eingang auftretenden Ueberspannung nicht mehr geöffnet werden können, weil sie sich nur im Nulldurchgang des Stromes öffnen lassen.

Bei der Beschreibung eines Power-Factor-Controlers UC3854 der Firma Unitrode wird auf der Seite 6-14 die Buck-Topologie zur Einschaltstrombegrenzung mit einer Pulsbreitemodulation vorgeschlagen. Die Ansteuerschaltungen für die Pulsbreitemodulation sind jedoch aufwendig. Nach dem Ablauf des Einschaltvorgangs wird der Schalter, der für die Einschaltstrombegrenzung periodisch geöffnet und geschlossen wurde, im Normalbetrieb geschlossen. Beim Auftreten einer dauernden Ueberspannung oder einer transienten Ueberspannung besteht kein weiterer Schutz für den Kondensator und die nachgeschaltete Last.

In EP-A-272 514 wird eine Anordnung gezeigt, die einen Überstromschutz und einen Schutz gegen kurze Uberspannungspulse bietet. Sie ist aber schaltungstechnisch relativ aufwendig. Ausserdem bietet sie keinen verlässlichen Schutz gegen dauernde Überspannung.

Es ist die Aufgabe der Erfindung, eine Schaltungsanordnung zur Begrenzung des Eingangsstromes zu schaffen, bei welcher nicht nur die Verlustleistung im Betrieb verkleinert wird, sondern auch ein optimaler Schutz gegen Ueberspannungen mit einem minimalen Aufwand an Bauelementen gewährleistet wird.

Diese Aufgabe wird durch Anspruch 1 gelöst.

Im folgenden wird die Erfindung anhand der beiliegenden Zeichnungen erläutert. Es zeigen:

Figur 1 ein Blockschema eines elektronischen Vorschaltgeräts mit einer Schaltungsanordnung gemäss der Erfindung;

Figur 2 verschiedene Spannungsverläufe bei einer anstehenden Überspannung an der Spannungsquelle U1;

Figur 3 eine detaillierte Ausführung der Schaltungsanordnung mit Nulldurchgangseinschaltung;

Figur 4 eine detaillierte Ausführung der Schaltungsanordnung mit Strombegrenzung; und

Figur 5 eine detaillierte Ausführung der Schaltungsanordnung mit Strombegrenzung und Schalthysterese gemäss der Erfindung.

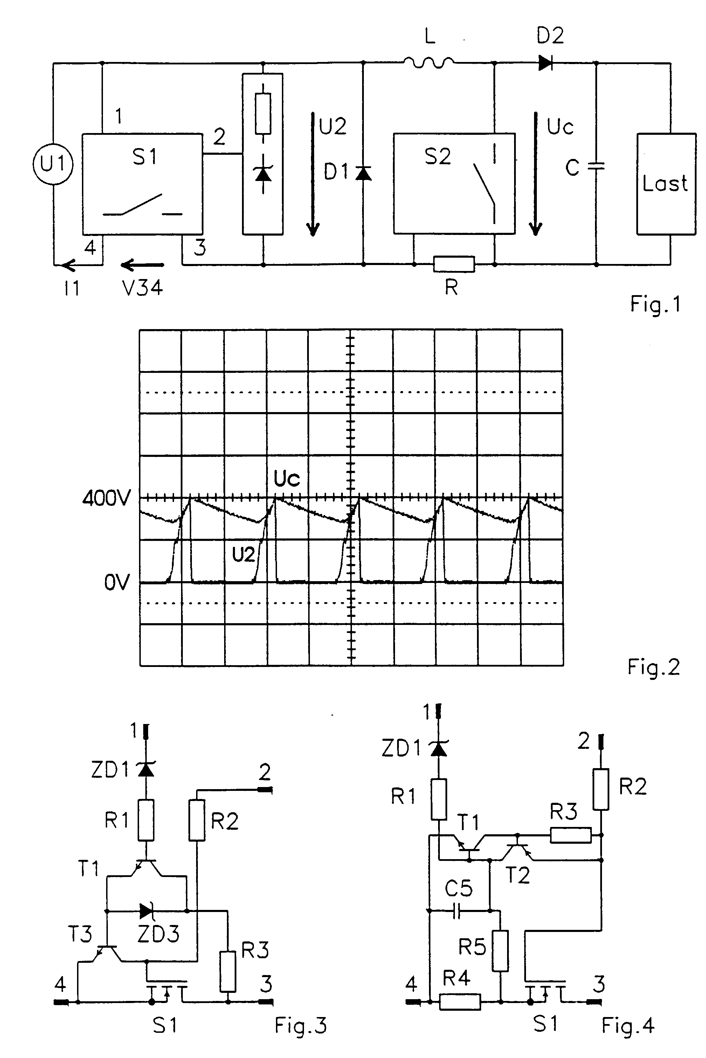

Figur 1 zeigt ein Blockschema eines elektronischen Vorschaltgerätes mit einer Spannungsquelle U1, mit einer den Eingangsstrom I1 begrenzenden Schaltungsanordnung S1, dazugehöriger Stromversorgung und einer erste Freilaufdiode D1, sowie einen aus Induktivität L, Schalter S2, Messwiderstand R und Diode D2 bestehenden Hochsetzsteller mit einem Kondensator C und mit einer Lastschaltung.

Betrachten wir zuerst den Fall, wenn der Spannungsverlauf der Spannungsquelle U1 einer vollweggleichgerichteten, sinusförmigen Netzspannung entspricht. Vor dem nicht dargestellten Netzgleichrichter ist ein Netzfilter vorgeschaltet, um die hochfrequenten Störungen der in der Last vorhandenen Endstufe eines elektronischen Vorschaltgerätes ausfiltern zu können. In der Darstellung sind der Einfachheit halber weder die vorgeschalteten Netzfilter und Gleichrichter noch die Endstufe des elektronischen Vorschaltgerätes mit einer zu betreibenden Leuchtstofflampe gezeichnet. Beim Einschalten der Spannungsquelle U1 in ihrem Spitzenwert würde ohne eine Strombegrenzung der Einschaltstrom nur durch den Innenwiderstand des Netzes und des vor dem Vollweggleichrichter vorgeschalteten Netzfilters und durch die relativ kleine Induktivität L begrenzt. Die Schaltungsanordnung S1 ist so ausgebildet, dass sie den Einschaltstrom durch eine Einschaltung im Nulldurchgang der Spannungsquelle U1 oder durch ein periodisches Ein- und Ausschalten des Schalters zwischen den Klemmen 3 und 4 der Schaltungsanordnung S1 begrenzt. Bei einer Einschaltung der Spannungsquelle U1 im Spitzenwert der Netzspannung ist die Spannung über dem Kondensator gleich Null und somit steht über der Schaltungsanordnung S1 die volle Netzspannung, falls der interne Schalter geöffnet bleibt.

Beim Einschalten des internen Schalters S1 im Nulldurchgang der Netzspannung wird der maximale Wert des Einschaltstromes I1max durch die Grösse des Kondensators C und die Netzfrequenz f bestimmt :

$$I1max = C \cdot 2 \cdot \pi \cdot f \cdot U1max$$

Wenn dieser maximale Einschaltstrom erlaubt ist, kann der interne Schalter in der Schaltungsanordnung S1 nach dem erstmaligen Einschalten geschlossen bleiben. Dazu ist eine an der Klemme 2 angeschlossene Spannungsversorgung für die Schaltungsanordnung S1 vorgesehen. An der Klemme 1 der Schaltungsanordnung S1 wird bei geschlossenem Schalter die Grösse der Eingangsspannung U1 überwacht. Wenn die Eingangsspannung einen vorbestimmten Schwellenwert übersteigt, wird der Schalter wieder geöffnet, um den Kondensator C und die anschliessende Last vor einer Ueberspannung zu schützen. Beim nächsten Nulldurchgang der Spannung U1 wird der Schalter wieder geschlossen. Dieses Verfahren erlaubt den Betrieb des elektronischen Vorschaltgerätes bei durchgehend anstehender Ueberspannung, was z.B. bei einem Nulleiterunterbruch passieren kann. Die schematisch dargestellte Spannungsversorgung an der Klemme 2 mit einem Widerstand und einer Zenerdiode dient nur zum Verständnis der Schaltung. In Wirklichkeit kann die Spannungsversorgung für die Klemme 2 entweder aus dem Block S2 zur Ansteuerung des Hochsetzstellers oder aus dem mit Last angeschriebenen Block entnommen werden, wo sich auch die Endstufe des elektronischen Vorschaltgerätes befindet.

In Figur 2 sind zwei Spannungsverläufe gezeichnet, um die Wirkungsweise der Schaltungsanordnung S1 bei anstehender Ueberspannung an der Spannungsquelle U1 zu zeigen. Der erste Spannungsverlauf zeigt die nach der Schaltungsanordnung S1 gemessene Spannung U2.

Nach dem Nulldurchgang der Eingangsspannung U1 wird der Schalter S1 geschlossen. Wenn die Eingangsspannung U1 den vorgegebenen Schwellenwert von 400 V überschreitet, wird der Schalter S1 geöffnet und die Spannung U2 fällt zurück auf Null. Die über dem Kondensator gemessene Spannung Uc zeigt, dass der Kondensator C nur während des geschlossenen Zustands des Schalters S1 auf den maximalen Schwellenwert von 400 V geladen wird. Bei einer richtigen Dimensionierung der Schaltungsanordnung S1 kann dieser Zustand beliebig lange ohne Schaden am elektronischen Vorschaltgerät andauern. Dieser Zustand entsteht in der Praxis, wenn z.B. der Nulleiter unterbrochen wird. Messungen haben gezeigt, dass mit diesem Verfahren das elektronische Vorschaltgerät problemlos mit bis 450 Volt Netzspannung arbeiten kann.

Figur 3 zeigt eine mögliche Ausführung der Schaltungsanordnung. Der Schalter S1 wird mit einem N-Kanal Feldeffekttransistor realisiert, wobei ein Einsatz eines IGBT's (Isolated Gate Bipolar Transistor) absolut gleichwertig ist. Wenn über den Hauptanschlüssen 3,4 eine Spannung anliegt, die grösser als die Sperrspannung der Zenerdiode ZD3 ist, wird der Transistor T3 leitend und schliesst damit die Gate-Source Spannung des Feldeffekttransistors S1 kurz. Dadurch bleibt der Schalter S1 offen. Wenn die Spannung über den Hauptanschlüssen 3,4 unter die Sperrspannung der Zenerdiode ZD3 fällt, wird der Transistor T3 nicht mehr leitend, die Gate-Source Spannung des Feldeffekttransistors kann ansteigen und der Schalter S1 wird kurzgeschlossen. Damit erfolgt das Einschalten des Schalters S1 im wesentlichen beim Nulldurchgang der über den Hauptanschlüssen 3,4 des Schalters S1 liegenden Spannung. Die Klemme 2 dient zur Spannungsversorgung der Gate-Elektrode des Feldeffekttransistors und wird entsprechend zwischen 5 und 15 Volt gewählt. Der Widerstand R2 kann relativ hochohmig gewählt werden, weil die Einschaltzeit im Bereich der Netzfrequenz liegt und bei geöffnetem Schalter S1 relativ hohe Spannung über dem Widerstand R2 auftreten kann.

Figur 4 zeigt eine andere Variante der Schaltungsanordnung S1, ohne Nulldurchgangseinschaltung aber dafür mit einer Begrenzung des Eingangsstromes I1 unabhängig vom Wert des zu ladenden Kondensators C. Der Schalter S1 ist auch hier in Form eines N-Kanal Feldeffekttransistors dargestellt. Wenn an der Klemme 2 genügend Spannung zur Versorgung der Gate-Source Spannung ansteht, wird der Schalter S1 geschlossen. Der Eingangsstrom I1 fliesst dabei durch einen Messwiderstand R4. Wenn der Eingangsstrom I1 seinen vorgegebenen Maximalwert I1max erreicht, wird die Gate-Source Spannung mit einem durch Transistoren T1 und T2 gebildeten Thyristor kurzgeschlossen und der Schalter S1 wird geöffnet. Dabei lässt sich der maximale Eingangsstrom I1max aus der Gatespannung des Thyristors T1/T2 und dem Wert des Messwiderstandes R4 bestimmen :

$$I1max = 0.6V / R4$$

R3 ist so bemessen, dass der Thyristor T1,T2 zwar gezündet und somit durchgeschaltet werden kann, dass aber nach dem Durchschalten und der Entladung der Gate-Kapazität von S1 die Spannung über R3 zu klein wird, um T2 völlig offen zu halten. Nach der Entladung von C5 über R5 und T1 wird also der Thyristorübergang wieder geöffnet. Somit lässt sich mit dem Widerstand R5 und dem Kondensator C5 am Gate des Thyristors sowie mit dem den Haltestrom des Thyristors beeinflussenden Widerstand R3 die Haltezeit des Thyristors und damit die Zeitdauer bestimmen, während der der Schalter S1 offen bleibt. Nach dieser Zeitdauer wird der Schalter S1 erneut geschlossen und das Schliessen und Oeffnen des Schalters wird so lange fortgesetzt, bis der Kondensator C so weit geladen ist, dass der Eingangstrom unter dem vorgegebenen Wert I1max bleibt. Danach bleibt der Schalter S1 im Normalbetrieb des elektronischen Vorschaltgerätes geschlossen. Die Sperrspannung der Zenerdiode ZD1 bestimmt wie bei Figur 3 den Schwellenwert der Ueberspannung der Spannungsquelle U1. Tritt diese Ueberspannung auf, beginnt ein Strom durch die Zenerdiode zu fliessen, was zum Zünden des Thyristors T1/T2 und Kurzschluss der Gate-Source Spannung des Feldeffekttransistors führt. Damit öffnet der Schalter S1 und der Kondensator C, und die Endstufe des elektronischen Vorschaltgerätes wird geschützt.

Die in Figur 4 dargestellte Schaltungsanordnung S1 kann auch mit der Nulldurchgangseinschaltung ergänzt werden, wie sie in Figur 3 gezeigt ist. Bei einer konstanten Gleichspannung an der Spannungsquelle U1 darf aber die Nulldurchgangseinschaltung nicht verwendet werden, sonst wird der Schalter S1 am Anfang nie geschlossen. Analog dazu kann die in Figur 3 dargestellte Schaltungsanordnung mit der Messung des Eingangsstromes I1 ergänzt werden.

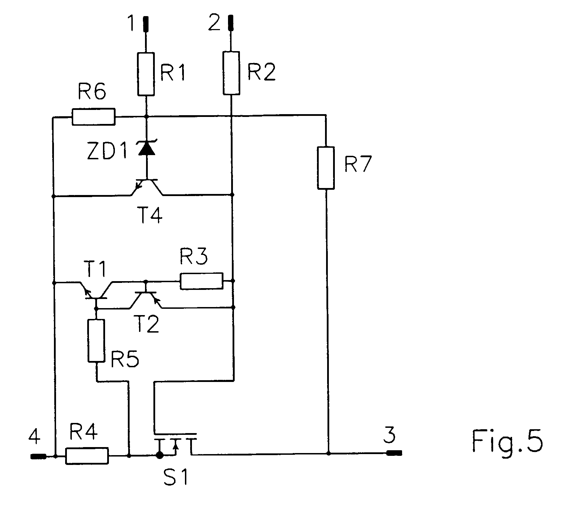

Figur 5 zeigt eine weitere Variante der Schaltungsanordnung S1 mit Begrenzung des Eingangsstromes I1 und mit einer Schalthysterese bei der Ueberspannungsbegrenzung. Die Begrenzung des Eingangsstromes funktioniert auf die gleiche Art wie bereits bei Figur 4 beschrieben. Nur der Kondensator C5 wurde ausgelassen. Die Zeitdauer, während welcher der Schalter S1 nach Erreichen des maximalen Schwellenwertes des Eingangsstromes I1 offen bleibt, ist bei dieser Ausführung durch die Entladezeit und die wiederholte Ladezeit der Gatekapazität von S1 bestimmt. Wenn der Entladestrom der Gatekapazität unter den Haltestrom des mit T1 und T2 gebildeten Thyristors sinkt, wobei der Haltestrom durch R3 bestimmt ist, hört der Thyristor auf zu leiten, die Gatekapazität wird wieder über R2 geladen und der Schalter S1 geschlossen. Auf diese Weise ist der Eingangsstrom I1 jeweils auf den durch den Widerstand R4 vorbestimmten Spitzenwert begrenzt und der Kondensator C (Figur 1) wird pulsförmig aufgeladen. Nach dem Aufladen des Kondensators C und während des normalen Betriebs bleibt der Schalter S1 geschlossen. Die Eingangsspannung U1 (Figur 1) kann dabei einen gleichgerichteten sinusförmigen Verlauf aufweisen oder als Gleichspannung konstant sein. Wenn der Schalter S1 geschlossen ist, erscheint der Widerstand R7 von der Klemme 1 aus gesehen als parallel zu dem Widerstand R6 geschaltet. Damit ergibt sich eine Einschaltschwelle für den Transistor T4 in Abhängigkeit der zwischen den Klemmen 1 und 4 anliegenden Eingangsspannung U1. Wir bezeichnen diese Spannungsschwelle, bei welcher der Transistor T4 zu leiten beginnt und damit der Schalter S1 geöffnet wird, als U1aus. Diese Spannungsschwelle lässt sich berechnen aus:

$$U1aus = (VZD1 + 0.6) * (1 + R1/R7 + R1/R6),$$

wobei VZD1 die Zenerspannung der Zenerdiode ZD1 ist.

Wenn die Eingangsspannung U1 diese Spannungsschwelle überschreitet, wird der Schalter S1 geöffnet, um die nachfolgende Schaltung und besonders den Kondensator C vor Ueberspannung zu schützen. Aus Figur 1 ist ersichtlich, dass die gesamte Eingangsspannung U1 in diesem Fall über dem Schalter S1 liegt, weil der Schalter S2 des Hochsetzstellers geschlossen wird, um die fehlende Energie in den Kondensator C liefern zu können. Da kein Strom bei geöffnetem Schalter S1 durch die Induktivität L fliessen kann, bleibt der Schalter S2 geschlossen. Als Folge wird jetzt der Widerstand R7 parallel zu Widerstand R1 geschaltet. Daraus ergibt sich eine andere Schaltschwelle zum Schliessen des Schalters S1, wenn die Eingangsspannung U1 unter diese Schaltschwelle sinkt. Nennen wir diese neue Schaltschwelle U1ein, wobei ihre Berechnung ergibt:

$$U1ein = (VZD1 + 0.6) * (1 + 1 / (R6/R7 + R6/R1).$$

Bei geeigneter Dimensionierung lassen sich die beiden Schaltschwellen U1aus und U1ein und damit die Schalthysterese wunschgemäss einstellen. Wählt man beispielsweise VZD1 = 15V, R1 = 25R, R7 = 250R und R6 = R, ergeben sich für die Eingangsspannung folgende Schaltschwellen:

$$U1aus = 407 \text{ V}, \ U1ein = 370 \text{ V}.$$

Die Vorteile der Schaltungsanordnung nach Figur 5 liegen nicht nur in den voneinander unabhängigen einstellbaren Schaltschwellen mit Schalthysterese, sondern auch in der über R7 zum schnellen Entladen der Gatekapazität vorhandenen Mitkopplung, welche die Schaltverluste am Schalter S1 verkleinert.

**Patentansprüche**

1. Schaltungsanordnung zur Begrenzung des Einschaltstromes und der Überspannungen einer Gleichspannungsversorgung (L, D2, C, S2, R) eines Vorschaltgerätes, die einen elektronischen Schalter (S1), der in Serie zu der Gleichspannungsversorgung liegt, und eine Ansteuerschaltung zum Öffnen und Schliessen des Schalters (S1) aufweist, wobei die Ansteuerschaltung einen Schwellspannungsüberwacher (ZD1, T4) und einen Kontrollpunkt, der über einen Widerstand (R1) an einem Pol (1) einer Spannungsquelle (U1) liegt, enthält, wobei der Schalter (S1) mit einem ersten Anschluss (3) mit der Gleichspannungsversorgung verbunden ist, die Ansteuerschaltung einen Messanschluss aufweist, welcher zur Messung einer Überspannung mit dem einen Pol (1) der Spannungsquelle (U1) verbunden ist, der Schalter (S1) mit einem zweiten Anschluss mit dem anderen Pol (4) der Spannungsquelle (U1) verbunden ist und durch den Schwellspannungsüberwacher (ZD1, T4) eine Kontrollspannung zwischen dem Kontrollpunkt und dem anderen Pol (4) der Spannungsquelle überwachbar ist, **dadurch gekennzeichnet**, dass der Kontrollpunkt mit einem weiteren Widerstand (R6) mit dem anderen Pol (4) der Spannungsquelle (U1) und mit einem dritten Widerstand (R7) mit dem ersten Anschluss (3) des Schalters (S1) verbunden ist, derart, dass ein Unterbrechen des eingeschalteten Schalters (S1) bei einer höheren Eingangsspannung (Ulaus) als das Einschalten (Ulein) des unterbrochenen Schalters (S1) bewirkt wird.

2. Schaltungsanordnung nach Anspruch 1, dadurch gekennzeichnet, dass der Schwellspannungsüberwacher (ZD1, T4) mindestens eine Zenerdiode (ZD1) aufweist, deren Sperrspannung eine Schwellspannung definiert, und dass der durch die Zenerdiode fliessende Strom bei auftretender Überspannung eine Öffnung des Schalters (S1) bewirkt.

3. Schaltungsanordnung nach Anspruch 2, dadurch gekennzeichnet, dass die Zenerdiode (ZD1) an der Basis eines Transistors (T4) liegt, bei dessen Durchschalten eine Steuerspannung des Schalters (S1) reduziert wird.

4. Schaltungsanordnung nach Anspruch 3, dadurch gekennzeichnet, dass parallel zum Transistor (T4) eine Thyristorschaltung (T1, T2) angeordnet ist, welche beim Auftreten eines Ueberstroms (I1max) zündet.

5. Schaltungsanordnung nach einem der vorangehenden Ansprüche, dadurch gekennzeichnet, dass der elektronische Schalter S1 aus einem N-Kanal Feldeffekttransistor oder einem IGBT besteht.

## Claims

1. Circuit for limiting the inrush current and overvoltages of a DC power supply (L, D2, C, S2, R) of an electronic ballast comprising an electronic switch (S1) in series to the DC power supply and a driver circuit for opening and closing the switch (S1), wherein the driver circuit comprises a threshold voltage monitor (ZD1, T4) and a control point connected over a resistor to one pole (1) of a voltage source (U1), wherein the switch (S1) is connected to the DC voltage supply by means of a first terminal (3), the driver circuit comprises a measuring terminal connected to the one pole (1) of the voltage source (U1), the switch (S1) is connected with a second terminal to the other pole (4) of the voltage source (U1), and a control voltage between the control point and the other pole (4) of the voltage source can be monitored by the threshold voltage monitor (ZD1, T4), characterised in that the control point is connected over a third resistor (R7) to the other pole (4) of the voltage source and the first terminal (3) of the switch such that an opening of the closed switch (S1) is caused at a higher voltage (Ulaus) than a closing (Ulein) of the opened switch (S1).

2. Circuit of claim 1 characterised in that the threshold voltage monitor (ZD1, T4) comprises at least one Zener diode (ZD1), the blocking voltage of which defines a threshold voltage, and that the current running through the Zener diode during overvoltage causes an opening of the switch (S1).

3. Circuit of claim 2 characterised in that the Zener diode (ZD1) is connected to the base of a transistor (T4), by the activation of which transistor a control voltage of the switch (S1) is reduced.

4. Circuit of claim 3 characterised in that a thyristor circuit (T1, T2) is arranged parallel to the transistor (T4), which fires upon occurrence of an overcurrent (I1max).

5. Circuit of one of the preceding claims characterised in that the electronic switch S1 consists of an n-channel field effect transistor or an IGBT.

## Revendications

1. Circuit limiteur du courant de démarrage et de la surtension de l'alimentation en courant continu (L, D2, C, S2, R) d'un ballast, comportant un interrupteur électronique (S1) connecté en série avec l'alimentation en courant continu, ainsi qu'un circuit de commande pour ouvrir et fermer l'interrupteur (S1), le circuit de commande comportant un organe de surveillance (ZDI, T4) du seuil de tension et un point de contrôle connecté par l'intermédiaire d'une résistance (R1) à un pôle (1) d'une source de tension (U,), une première borne (3) de l'interrupteur (S1) étant connectée à la source de courant continu, le circuit de commande comportant une borne de mesure connectée à un pôle (1) de la source de tension (U1) pour mesurer la surtension, une seconde borne de l'interrupteur (S1) étant connectée avec l'autre pôle (4) de la source de tension (U1), et une tension de contrôle établie entre le point de contrôle et cet autre pôle (4) de la source de tension pouvant être surveillée par l'organe de surveillance (ZD1, T4), caractérisé en ce que le point de contrôle est connecté par l'intermédiaire d'une autre résistance (R6) avec l'autre pôle (4) de la source de tension (U1) et par l'intermédiaire d'une troisième résistance (R7) avec la première borne (3) de l'interrupteur (S1), de manière à ce que l'interrupteur S1) fermé ne s'ouvre qu'à une tension d'entrée ($U_{1aus}$) supérieure à celle ($U_{1ein}$) produisant la fermeture de l'interrupteur (S1) ouvert.

2. Circuit selon la revendication 1, caractérisé en ce que l'organe de surveillance du seuil de tension (ZD1, T4) comporte au moins une diode Zener (ZD1) dont la tension de fermeture détermine une tension-seuil, et que le courant traversant la diode Zener provoque l'ouverture de l'interrupteur (S1) lors d'une surtension.

3. Circuit selon la revendication 2, caractérisé en ce que le diode Zener (ZD1) est connectée à la base d'un transistor (T4) dont l'activation provoque une réduction d'une tension de commande de l'interrupteur (S1).

4. Circuit selon la revendication 3, caractérisé en ce qu'un circuit à thyristor (T1, T2) est connecté en parallèle avec le transistor (T4) et que ce circuit est amorcé lors de l'existence d'un courant excessif ($I_{1max}$).

5. Circuit selon une des revendications précédenté, caractérisé en ce que l'interrupteur électronique (S1) consiste en un transistor a effet de champ de type N ou en un IGBT.

Fig.1

Fig.2

Fig.3

Fig.4

Fig.5